# EUROPEAN PATENT SPECIFICATION

(11) **EP 4 638 188 B1**
(45) Date of publication and mention of the grant of the patent: **15.04.2026**
(21) Application number: 23828485.5
(22) Date of filing: 07.12.2023
(51) Int. Cl.: B60L 53/80, B60L 50/60

(54) **NOTIFICATION CONTROL METHOD, NOTIFICATION CONTROLLER, AND VEHICLE**
BENACHRICHTIGUNGSVERFAHREN, BENACHRICHTIGUNGSSTEUERGERÄT UND FAHRZEUG
PROCÉDÉ DE COMMANDE DE NOTIFICATION, CONTRÔLEUR DE NOTIFICATION ET VÉHICULE

(30) Priority: 21.12.2022 JP 2022204310
(43) Date of publication of application: 29.10.2025
(73) Proprietor: TOYOTA JIDOSHA KABUSHIKI KAISHA, Toyota-shi, Aichi-ken 471-8571 (JP)
(72) Inventor: MURATA, Soshiro, TOYOTA-SHI, AICHI-KEN, 471--8571 (JP); UMENO, Hiroshi, TOYOTA-SHI, AICHI-KEN, 471--8571 (JP); NOMURA, Takahiro, TOYOTA-SHI, AICHI-KEN, 471--8571 (JP); ONOZUKA, Yuya, TOYOTA-SHI, AICHI-KEN, 471--8571 (JP)
(74) Representative: Cabinet Beau de Loménie
(86) International application number: PCT/IB2023/062366
(87) International publication number: WO 2024/134344

(56) References cited:
- EP-A1- 2 578 997
- WO-A2-2010/033517
- CN-A- 103 889 773
- US-A1- 2010 094 496
- US-A1- 2018 260 887
- US-A1- 2019 272 600
- US-A1- 2020 386 561
- US-B2- 11 400 828

## Description

### BACKGROUND OF THE INVENTION

### 1. Field of the Invention

The disclosure relates to a notification control method, a notification controller, and a vehicle and, more specifically, to a notification control method that is executed by a notification controller that notifies a user of a vehicle to replace an electrical storage device mounted on the vehicle and storing electric power used to drive the vehicle, a notification controller that notifies a user of a vehicle to replace an electrical storage device mounted on the vehicle and storing electric power used to drive the vehicle, and a vehicle that notifies a user to replace an electrical storage device storing electric power used to drive the vehicle.

### 2. Description of Related Art

There has been a system that identifies at least one battery service station that an electrified vehicle can reach with a remaining amount of charge and in which the electrified vehicle shows a user of the electrified vehicle the at least one battery service station (see, for example, Japanese Unexamined Patent Application Publication No. 2014-135892 (JP 2014-135892 A)). EP 2 578 997 A1 discloses another example of a system for supporting a user of an electrically driven vehicle.

### SUMMARY OF THE INVENTION

In the technology of JP 2014-135892 A, when the state of charge of a battery is lower than a threshold, a battery service station that can be reached with a remaining amount of charge is identified. However, for example, assuming an area with a relatively small number of replacement places for electrical storage devices around, no reachable replacement place can be left therearound when the remaining amount of charge of the electrical storage device is less than a threshold.

The disclosure provides a notification control method, a notification controller, and a vehicle that are capable of prompting a user to replace an electrical storage device before a remaining amount of electric power of the electrical storage device falls below a remaining amount of electric power required for a vehicle to reach a replacement place for the electrical storage device.

A first aspect of the disclosure provides a notification control method. The notification control method is executed by a notification controller configured to notify a user of a vehicle to replace an electrical storage device mounted on the vehicle and configured to store electric power used to drive the vehicle. The notification controller includes a processor and a notification device. The notification control method includes a setting step of setting, by the processor, a threshold related to an amount of electric power required to travel between a current location of the vehicle and a replacement place for the electrical storage device, the replacement place satisfying a predetermined condition, an identifying step of identifying, by the processor, a status value with which a remaining amount of electric power of the electrical storage device is identified, and, when the status value falls below the threshold, a controlling step of controlling, by the processor, the notification device such that the notification device notifies the user to prompt the user to replace the electrical storage device.

According to the first aspect, when the status value with which the remaining amount of electric power of the electrical storage device is identified falls below the threshold related to the amount of electric power required to travel between the current location of the vehicle and the replacement place for the electrical storage device, the user is notified to prompt the user to replace the electrical storage device. As a result, it is possible to provide the notification control method capable of prompting the user to replace the electrical storage device before the remaining amount of electric power of the electrical storage device falls below the remaining amount of electric power required for the vehicle to reach the replacement place for the electrical storage device.

In the first aspect, the predetermined condition may include a condition that the vehicle reaches the replacement place from the current location with the least amount of electric power required.

With the above configuration, it is possible to prompt the user to replace the electrical storage device before the remaining amount of electric power falls below the remaining amount of electric power required for the vehicle to reach the replacement place that the vehicle can reach from the current location with the least amount of electric power required.

In the first aspect, the notification control method may include an acquiring step of acquiring, by the processor, information on an amount of electric power of an electrical storage device stored the replacement place. The predetermined condition may include a condition related to an amount of electric power of the electrical storage device, indicated by the information acquired.

With the above configuration, the replacement place for which replacement of the electrical storage device is prompted can be set to the replacement place where the electrical storage device that satisfies the condition related to the amount of electric power is stored.

In the first aspect, the setting the threshold may include a providing step of setting, by the processor, the threshold with an electric power efficiency and a distance between the current location and the replacement place that satisfies the predetermined condition.

With the above configuration, it is possible to further accurately set the threshold related to the amount of electric power required to travel between the current location and the replacement place.

In the first aspect, the notification control method may include a providing step of controlling, by the processor, the notification device such that the notification device provides, to the user, a screen for booking replacement of the electrical storage device at the replacement place.

With the above configuration, it is possible to reduce time and effort of the user to perform operation for booking replacement of the electrical storage device at the replacement place.

In the first aspect, the notification control method may include, a prohibiting step of prohibiting, by the processor, notification to prompt the user to replace the electrical storage device, when the remaining amount of electric power falls below the amount of electric power required to travel between the current location of the vehicle and the replacement place that satisfies the predetermined condition.

With the above configuration, when the remaining amount of electric power of the electrical storage device falls below the amount of electric power required to travel between the current location of the vehicle and the replacement place, it is possible to stop unnecessary notification such as prompting for replacement by determining that the user has no intention to replace the electrical storage device (the user does not have an intention to replace the electrical storage device and has an intention to charge the electrical storage device).

In the first aspect, in controlling the notification device, the processor may be configured to control the notification device such that the notification device notifies the user to prompt the user to replace the electrical storage device, when a distance between the current location of the vehicle and the replacement place that satisfies the predetermined condition is shorter than a predetermined distance.

In the case of an area where there is no replacement place around, it is presumable that, basically, the electrical storage device is not replaced and is charged. For this reason, when the distance between the current location of the vehicle and the replacement place is longer than or equal to the predetermined distance, the user feels burdensome if the user is notified to prompt the user to replace the electrical storage device. With such a configuration, when the distance between the current location of the vehicle and the replacement place is shorter than the predetermined distance, the user is notified prompt the user to replace the electrical storage device. As a result, it is possible for the user not to feel burdensome.

In the first aspect, the notification control method may further include an acquiring step of acquiring, by the processor, traffic congestion information of a route from the current location of the vehicle to the replacement place that satisfies the predetermined condition, and an offering step of controlling, by the processor, the notification device such that the notification device offers to suppress consumption of electric power until traffic congestion disappears when a likelihood of traffic congestion is indicated by the traffic congestion information.

The user is notified to prompt the user to replace the electrical storage device when the status value with which the remaining amount of electric power of the electrical storage device is identified falls below the threshold related to the amount of electric power required to reach the replacement place for the electrical storage device. In such a case, if the vehicle meets traffic congestion and consumes an extra amount of electric power, a likelihood that the vehicle cannot reach the replacement place increases. With such a configuration, when the likelihood of traffic congestion in the route from the current location to the replacement place is indicated, the user is offered to suppress consumption of electric power until the traffic congestion disappears. As a result, it is possible to avoid a situation that the vehicle cannot reach the replacement place.

A second aspect of the disclosure provides a notification controller. The notification controller is configured to notify a user of a vehicle to replace an electrical storage device mounted on the vehicle and configured to store electric power used to drive the vehicle. The notification controller includes a processor and a notification device. The processor is configured to set a threshold related to an amount of electric power required to travel between a current location of the vehicle and a replacement place for the electrical storage device, the replacement place satisfying a predetermined condition, identify a status value with which a remaining amount of electric power of the electrical storage device is identified, compare the status value with the threshold, and, when the status value falls below the threshold, control the notification device such that the notification device notifies the user to prompt the user to replace the electrical storage device.

According to the second aspect, it is possible to provide the notification controller capable of prompting the user to replace the electrical storage device before the remaining amount of electric power of the electrical storage device falls below the remaining amount of electric power required for the vehicle to reach the replacement place for the electrical storage device.

A third aspect of the disclosure provides a vehicle. The vehicle is configured to notify a user to replace an electrical storage device configured to store electric power used to drive the vehicle. The vehicle includes a processor, a communication device used to communicate with an external device, and a notification device configured to notify the user of information. The processor is configured to control the communication device such that the communication device sends, to the external device, information indicating a current location of the vehicle and a remaining amount of electric power of the electrical storage device, and control the notification device such that the notification device notifies information prompting to replace the electrical storage device when a status value with which the remaining amount of electric power is identified falls below a threshold related to an amount of electric power required to travel between the current location and a replacement place for the electrical storage device. The information is sent from the external device. The threshold is identified by the external device. The replacement place satisfies a predetermined condition.

According to the third aspect, it is possible to provide the vehicle capable of prompting the user to replace the electrical storage device before the remaining amount of electric power of the electrical storage device falls below the remaining amount of electric power required for the vehicle to reach the replacement place for the electrical storage device.

According to the first aspect, the second aspect, and the third aspect of the disclosure, it is possible to provide the notification control method, the notification controller, and the vehicle that are capable of prompting the user to replace the electrical storage device before the remaining amount of electric power of the electrical storage device falls below the remaining amount of electric power required for the vehicle to reach the replacement place for the electrical storage device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that shows the configuration of a battery replacement system according to an embodiment;
FIG. 2 is a block diagram that schematically shows the configuration of devices included in the battery replacement system according to the embodiment;
FIG. 3 is a flowchart that shows the flow of a battery replacement notification process according to a first embodiment; and
FIG. 4 is a flowchart that shows the flow of a battery replacement notification process according to a second embodiment.

### DETAILED DESCRIPTION OF EMBODIMENTS

Hereinafter, embodiments of the disclosure will be described in detail with reference to the accompanying drawings. Like reference signs denote the same or corresponding portions in the drawings, and the description thereof will not be repeated.

### First Embodiment

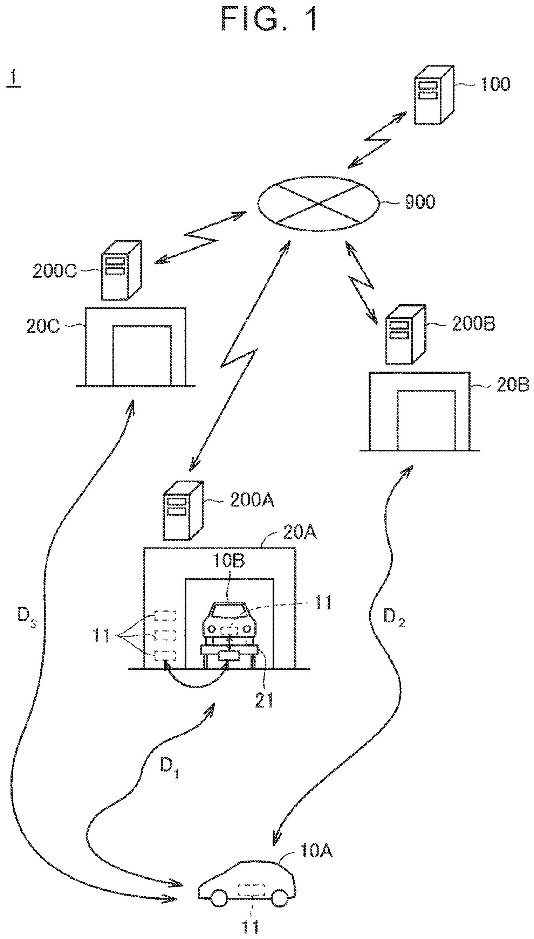

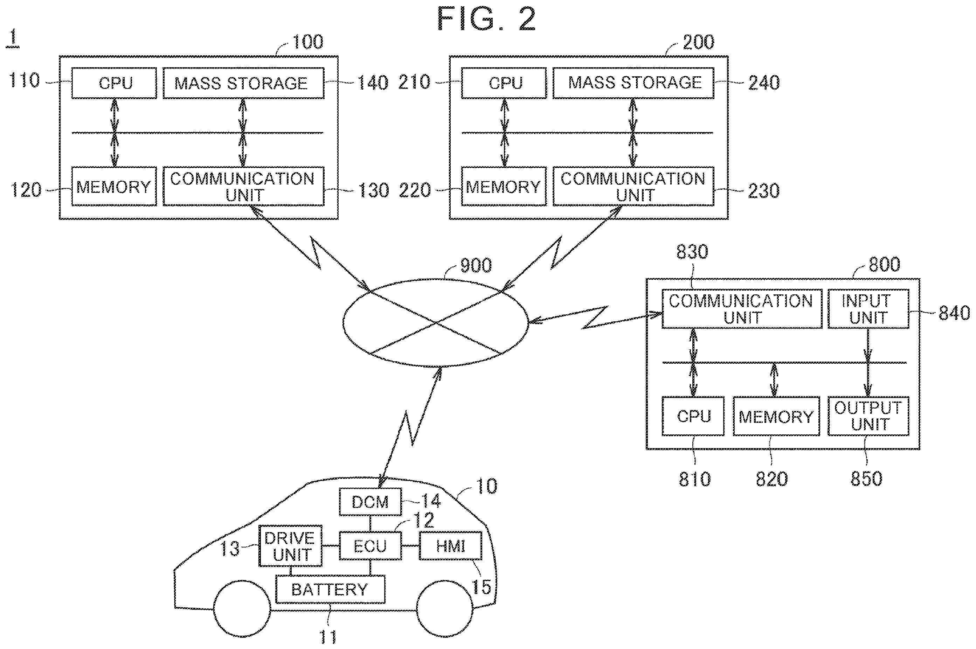

FIG. 1 is a diagram that shows the configuration of a battery replacement system 1 according to the embodiment. FIG. 2 is a block diagram that schematically shows the configuration of devices included in the battery replacement system 1 according to the embodiment. As shown in FIG. 1 and FIG. 2, the battery replacement system 1 includes a plurality of vehicles 10A, 10B (hereinafter, also representatively referred to as "vehicles 10"), a plurality of replacement stations 20A, 20B, 20C (hereinafter, also representatively referred to as "replacement stations 20"), equipment servers 200A, 200B, 200C (also representatively referred to as "equipment servers 200") respectively provided in the replacement stations 20A, 20B, 20C, and a management server 100. The battery replacement system 1 may include a mobile terminal 800 carried by a user of each of the vehicles 10. The vehicles 10A, 10B, the equipment servers 200A, 200B, 200C, the management server 100, and the mobile terminals 800 are communicable via a communication network 900.

The vehicle 10 includes a battery 11, an electronic control unit (ECU) 12, a drive unit 13, a data communication module (DCM) 14, and a human machine interface (HMI) 15. The battery 11 stores electric power used to drive the vehicle 10 and is mounted on the vehicle 10 in a state of being replaceable by a replacement device 21 (described later). The battery 11 is, for example, a lithium ion battery. However, the battery 11 is not limited thereto. The battery 11 may be a battery of another type, for example, a nickel-metal hydride battery or an all-solid-state battery.

The ECU 12 includes a central processing unit (CPU), a memory, and a global positioning system (GPS). The memory includes a random access memory (RAM) and a read only memory (ROM) and stores programs and data used by the CPU. The CPU executes predetermined processes defined by programs in accordance with the programs and data stored in the memory and data input from an outside and stores data of the executed results in the memory or outputs the data to the outside. The GPS detects location information of the vehicle 10 and transfers the location information to the CPU.

The drive unit 13 includes a motor generator and an inverter. The inverter drives the motor generator by using electric power of the battery 11 and charges the battery 11 with regenerative electric power from the motor generator. The drive unit 13 may further include an engine that runs on fuel to drive the motor generator or the vehicle 10. In other words, the vehicle 10 may be a battery electric vehicle (BEV) that includes a motor generator and does not include an engine or may be a hybrid electric vehicle (HEV) or a plug-in hybrid electric vehicle (PHEV) that includes a motor generator and an engine. Also, the vehicle 10 may be a fuel cell electric vehicle (FCEV).

The DCM 14 is a module for communicating with an external device via the communication network 900, sends data from the ECU 12 to the external device, and transfers data from the external device to the ECU 12.

The HMI 15 is a device provided near a driver seat of the vehicle 10. The HMI 15 receives information input from a user and outputs the information to the ECU 12. The HMI 15 is configured to inform the information from the ECU 12 to the user by display or voice. The HMI 15 is configured to include, for example, a touch panel display.

The equipment server 200 includes a CPU 210, a memory 220, a communication unit 230, and a mass storage 240. The memory 220 includes a random access memory (RAM) and a read only memory (ROM). The communication unit 230 is communicable with an external device via the communication network 900, sends data from the CPU 210 to the external device, and transfers data from the external device to the CPU 210. The mass storage 240 is a hard disk drive (HDD), a solid state drive (SSD), or the like. The mass storage 240 stores programs and data used in the CPU 210. The CPU 210 executes predetermined processes defined by programs in accordance with the programs and data stored in the memory 220 or the mass storage 240 and data input from an external device to the communication unit 230 and stores data of the executed results in the memory 220 or the mass storage 240 or outputs the data from the communication unit 230 to the external device.

The replacement station 20 for the battery 11 includes the replacement device 21 and the equipment server 200. The replacement device 21, under control of the equipment server 200, detaches the battery 11 of the vehicle 10 from the vehicle 10, moves the battery 11 detached, to a storage location, starts charging the battery 11 moved, takes out the battery 11 charged, from the storage location, and attaches the battery 11 taken out, to the vehicle 10. In the embodiment, after replacement of the battery 11 is booked, the battery 11 charged up to a state of charge (SOC) = 80% is charged up to a full charge SOC = 100%.

The management server 100 includes a CPU 110, a memory 120, a communication unit 130, and a mass storage 140. The management server 100 manages replacement of the battery 11 at each of the replacement stations 20 in the battery replacement system 1. The functions of the CPU 110, memory 120, communication unit 130, and mass storage 140 of the management server 100 are respectively similar to those of the CPU 210, memory 220, communication unit 230, and mass storage 240 of the equipment server 200.

The mobile terminal 800 includes a CPU 810, a memory 820, a communication unit 830, an input unit 840. and an output unit 850. The functions of the memory 820 and communication unit 230 of the mobile terminal 800 are respectively similar to those of the memory 220 and communication unit 230 of the equipment server 200. The input unit 840 is made up of a touch panel, an operating button, and a microphone and transfers data input from the touch panel, the operating button, or the microphone to the CPU 810. The output unit 850 is made up of a display and a speaker and outputs data from the CPU 810 from the display or the speaker. The CPU 810 executes predetermined processes defined by programs in accordance with the programs and data stored in the memory 820, data input from an external device to the communication unit 830, and data input from the input unit 840 and stores data of the executed results in the memory 820 or outputs the data from the communication unit 830 to the external device or outputs the data from the output unit 850.

In the battery replacement system 1 described above, when the state of charge of the battery 11 is lower than a threshold, it is presumable to identify the replacement station 20 that the vehicle 10 can reach with a remaining amount of charge. Here, assuming an area with a relatively small number of the replacement stations 20 for the battery 11 around, no reachable replacement station 20 can be left therearound when the remaining amount of charge of the battery 11 is less than a threshold.

For this reason, a notification control method includes setting a threshold related to an amount of electric power required to travel between a current location of the vehicle 10 and, of the plurality of replacement stations 20 for the battery 11, the replacement station 20 that satisfies a predetermined condition, identifying a status value with which a remaining amount of electric power of the battery 11 is identified, and, when the status value falls below the threshold, executing a process for notifying a user to prompt the user to replace the battery 11.

With this configuration, when the status value with which the remaining amount of electric power of the battery 11 is identified falls below the threshold related to the amount of electric power required to travel between the current location of the vehicle 10 and the replacement station 20 for the battery 11, the user is notified to prompt the user to replace the battery 11. As a result, it is possible to prompt the user to replace the battery 11 before the remaining amount of electric power falls below the remaining amount of electric power required for the vehicle 10 to reach the replacement station 20 for the battery 11.

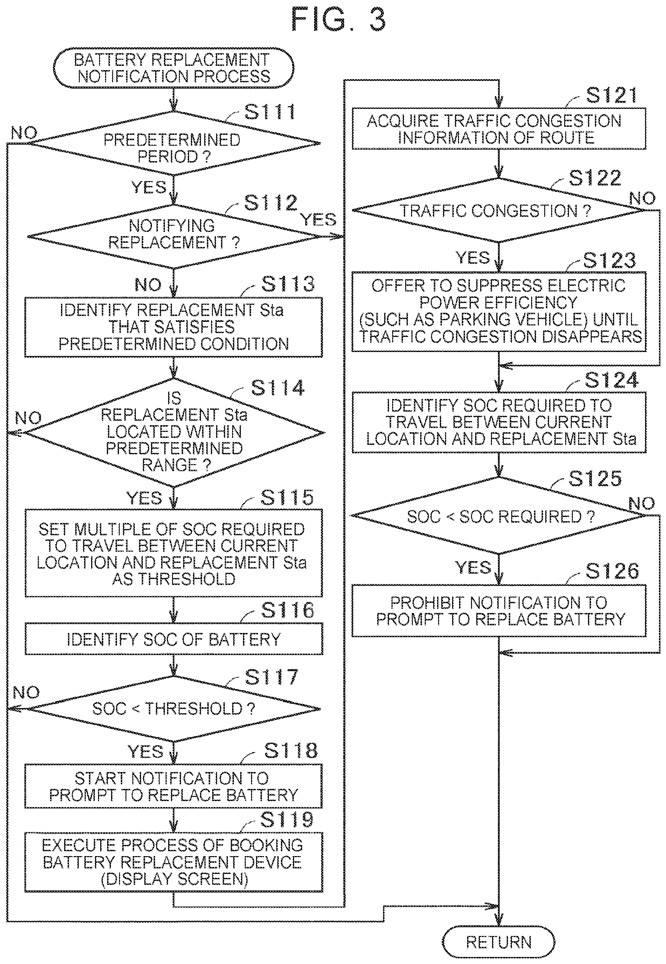

FIG. 3 is a flowchart that shows the flow of a battery replacement notification process according to the first embodiment. As shown in FIG. 3, the battery replacement notification process is called and executed at intervals of a constant period (for example, a constant period ranging from several milliseconds to several tens of milliseconds) from a higher-level process by the ECU 12 of the vehicle 10.

The ECU 12 of the vehicle 10 determines whether a predetermined period (for example, a period of every predetermined minutes, such as every minute) has elapsed (step S111). When the ECU 12 determines that the predetermined period has not elapsed (NO in step S111), the ECU 12 returns the process to the higher-level process of a source calling the battery replacement notification process.

On the other hand, when the ECU 12 determines that the predetermined period has elapsed (YES in step S111), the ECU 12 determines whether the HMI 15 is notifying to prompt to replace the battery 11 (step S112).

When the ECU 12 determines that the HMI 15 is not notifying to prompt to replace the battery 11 (NO in step S112), the ECU 12 identifies the replacement station 20 for the battery 11, which satisfies the predetermined condition (step S113). In the embodiment, the predetermined condition is a condition that the replacement station 20 is closest from the current location of the vehicle 10 (that is, a condition that the vehicle 10 can reach the replacement station 20 with the least amount of electric power required). The predetermined condition may include a condition that the battery 11 with a predetermined amount of electric power (for example, a value higher than or equal to 50%, such as SOC = 80%) or higher is stored in the replacement station 20. In this case, the SOC of the battery 11 stored is identified and stored by the equipment server 200 of the replacement station 20. The ECU 12 of the vehicle 10 acquires, from the equipment server 200, information indicating whether the battery 11 with the predetermined amount of electric power or greater is stored and identifies the replacement station 20 that satisfies the condition that the battery 11 with the predetermined amount of electric power or greater is stored. In the replacement station 20, when booking of the replacement device 21 is accepted by the equipment server 200, charging is started such that the battery 11 charged up to the predetermined amount of electric power is charged up to a full charge SOC = 100%.

The ECU 12 determines whether the replacement station 20 identified falls within a predetermined range from the current location (step S114). In the embodiment, the predetermined range is a range in which the travel distance of a route from the current location to the replacement station 20 is shorter than or equal to a predetermined distance. However, the predetermined range is not limited thereto. A linear distance from the current location to the replacement station 20 may fall within a range shorter than or equal to a predetermined distance or may fall within a range of the same municipality or the same prefecture as the current location.

When the ECU 12 determines that the replacement station 20 does not fall within the predetermined range (NO in step S114), the ECU 12 returns the process to the higher-level process of the source calling the battery replacement notification process. On the other hand, when the ECU 12 determines that the replacement station 20 falls within the predetermined range (YES in step S114), the ECU 12 sets a predetermined multiple (for example, a multiple greater than a multiple of one, such as a multiple of 1.1) of an SOC required to travel between the current location and the replacement station 20 as a threshold (step S115). The SOC required to travel between the current location and the replacement station 20 is set by using a distance between the current location and the replacement station 20 and an electric power efficiency (available travel distance per unit amount of electric power) of the vehicle 10.

The ECU 12 identifies the current SOC of the battery 11 (step S116) and determines whether the SOC is lower than the threshold (step S117). When the ECU 12 determines that the SOC is not lower than the threshold (NO in step S117), the ECU 12 returns the process to the higher-level process of the source calling the battery replacement notification process.

On the other hand, when the ECU 12 determines that the SOC is lower than the threshold (YES in step S117), the ECU 12 controls the HMI 15 such that the HMI 15 starts notification to prompt to replace the battery 11 (step S118). The notification to prompt to replace the battery 11 may include information on the replacement station 20 that satisfies the predetermined condition (for example, location, facility name, the number of batteries 11 with the predetermined amount of electric power or greater). In this situation, since the process of step S126 (described later) is not yet executed, the current SOC has not become lower than the SOC required to travel between the current location and the replacement station 20. In other words, when there is a small margin in the remaining amount of electric power of the battery 11 for the amount of electric power required for the vehicle 10 to reach the replacement station 20, such as when the current SOC is higher than or equal to the SOC required and is lower than the threshold, it is possible to inform the user to prompt the user to replace the battery 11.

Subsequently, the ECU 12 executes a process for booking the replacement device 21 for the battery 11 at the replacement station 20 with the HMI 15 (step S119). Booking the replacement device 21 of the replacement station 20 is managed by the management server 100 or the equipment server 200 of the replacement station 20. The booking process includes a process of communicating with a server that manages booking (the management server 100 or the equipment server 200) to display a screen for booking the replacement device 21 of the replacement station 20 on the HMI 15 of the vehicle 10 and a process of receiving booking details (when, for example, a plurality of the replacement devices 21 is provided at the replacement station 20, information with which the replacement device 21 to be booked is identified, start time, and end time) of the user by the server from the HMI 15 via the DCM 14.

When the ECU 12 determines that information prompting to replace the battery 11 is being notified (YES in step S112) or after step S119, the ECU 12 acquires traffic congestion information of a route from the current location to the replacement station 20 from a source providing traffic congestion information via the communication network 900 and the DCM 14 (step S121).

The ECU 12 determines whether there is traffic congestion in the route (step S122). When the ECU 12 determines that there is traffic congestion (YES in step S122), the ECU 12 offers the user with the HMI 15 that consumption of electric power is suppressed (for example, parking the vehicle 10, turning off the ignition of the vehicle 10, or stopping a device having a relatively greater consumption of electric power in the vehicle 10) until the traffic congestion disappears (step S123).

When the ECU 12 determines that there is no traffic congestion (NO in step S122) or after step S123, the ECU 12 identifies the SOC required to travel between the current location and the replacement station 20 (step S124). The ECU 12 identifies the current SOC of the battery 11 and determines whether the SOC is lower than the SOC required (step S125) When the ECU 12 determines that the SOC is lower than the SOC required (YES in step S125), the ECU 12 prohibits notification to prompt to replace the battery 11 (step S126). In such a case, it is possible not to provide notification that makes the user feel burdensome by determining that the user has no intention to replace the battery 11 (an intention to perform charging and not to perform replacement).

When the ECU 12 determines that the SOC is not lower than the SOC required (NO in step S125) or after step S126, the ECU 12 returns the process to the higher-level process of the source calling the battery replacement notification process.

### Second Embodiment

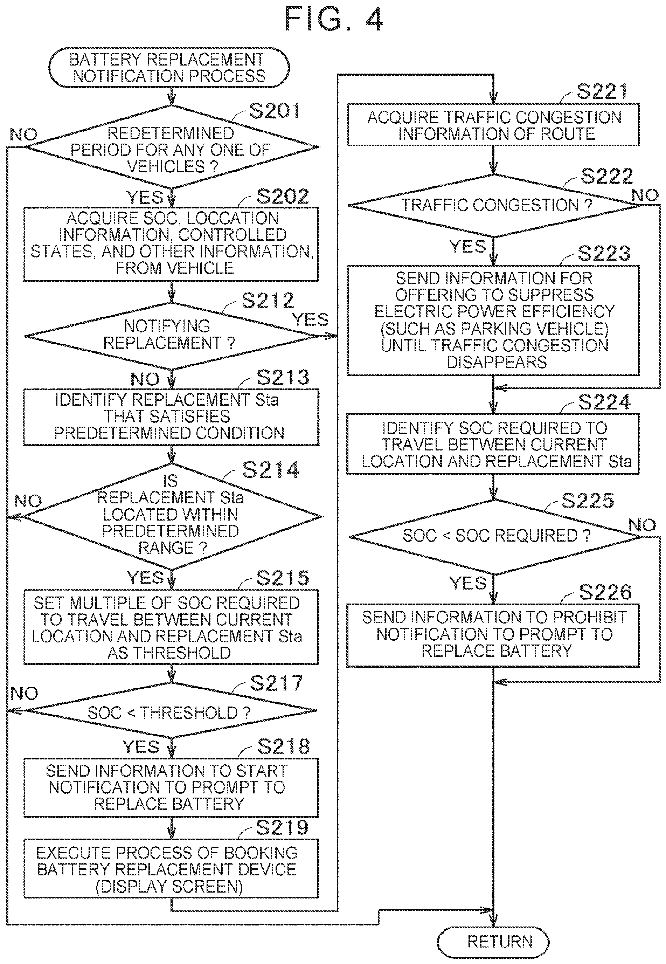

In the first embodiment, the battery replacement notification process shown in FIG. 3 is executed by the ECU 12 of the vehicle 10. In a second embodiment, as shown in FIG. 4 (described later), the battery replacement notification process is executed by the CPU 110 of the management server 100.

FIG. 4 is a flowchart that shows the flow of the battery replacement notification process according to the second embodiment. As shown in FIG. 4, the battery replacement notification process is called and executed at intervals of a constant period from the higher-level process by the CPU 110 of the management server 100.

The CPU 110 of the management server 100 determines whether a predetermined period (for example, a period of every predetermined minute, such as every minute) for any one of the vehicles 10 being managed has elapsed (step S201). When the CPU 110 determines that the predetermined period for any one of the vehicles 10 has not elapsed (NO in step S201), the CPU 110 returns the process to the higher-level process of a source calling the battery replacement notification process.

On the other hand, when the CPU 110 determines that the predetermined period for any one of the vehicles 10 has elapsed (YES in step S201), the CPU 110 acquires information such as an SOC of the battery 11 from the vehicle 10, location information of the vehicle 10, and controlled states of the vehicle 10 (for example, a controlled state of ignition on or off, a driving controlled state, a controlled state of the HMI 15, and an electric power efficiency of the vehicle 10) (step S202). The CPU 110 determines whether, in the vehicle 10, the HMI 15 is notifying to prompt to replace the battery 11 from the acquired controlled state of the HMI 15 (step S212).

The CPU 110 determines that, in the vehicle 10, the HMI 15 is not notifying to prompt to replace the battery 11 (NO in step S212), the CPU 110 identifies the replacement station 20 for the battery 11, which satisfies the predetermined condition (step S213). In the embodiment, the predetermined condition is a condition that the replacement station 20 is closest from the current location of the vehicle 10 (that is, a condition that the vehicle 10 can reach the replacement station 20 with the least amount of electric power required). The predetermined condition may include a condition that the battery 11 with a predetermined amount of electric power (for example, a value higher than or equal to 50%, such as SOC = 80%) or higher is stored in the replacement station 20. In this case, the SOC of the battery 11 stored is identified and stored by the equipment server 200 of the replacement station 20. The CPU 110 of the management server 100 acquires, from the equipment server 200, information indicating whether the battery 11 with the predetermined amount of electric power or higher is stored and identifies the replacement station 20 that satisfies the condition that the battery 11 with the predetermined amount of electric power or greater is stored. In the replacement station 20, when booking of the replacement device 21 is accepted by the equipment server 200, charging is started such that the battery 11 charged up to the predetermined amount of electric power is charged up to a full charge SOC = 100%.

The CPU 110 determines whether the replacement station 20 identified falls within a predetermined range from the current location of the vehicle 10 (step S214). In the embodiment, the predetermined range is a range in which the travel distance of a route from the current location to the replacement station 20 is shorter than or equal to a predetermined distance. However, the predetermined range is not limited thereto. A linear distance from the current location to the replacement station 20 may fall within a range shorter than or equal to a predetermined distance or may fall within a range of the same municipality or the same prefecture as the current location.

When the CPU 110 determines that the replacement station 20 does not fall within the predetermined range (NO in step S214), the CPU 110 returns the process to the higher-level process of the source calling the battery replacement notification process. On the other hand, when the CPU 110 determines that the replacement station 20 falls within the predetermined range (YES in step S214), the CPU 110 sets a predetermined multiple (for example, a multiple greater than a multiple of one, such as a multiple of 1.1) of an SOC required for the vehicle 10 to travel between the current location and the replacement station 20 as a threshold (step S215). The SOC required to travel between the current location and the replacement station 20 is set by using a distance between the current location and the replacement station 20 and an electric power efficiency (available travel distance per unit amount of electric power) of the vehicle 10.

The CPU 110 determines whether the acquired SOC of the battery 11 of the vehicle 10 is lower than the threshold (step S217). When the CPU 110 determines that the SOC is not lower than the threshold (NO in step S217), the CPU 110 returns the process to the higher-level process of the source calling the battery replacement notification process.

On the other hand, when the CPU 110 determines that the SOC is lower than the threshold (YES in step S217), the CPU 110 sends, to the vehicle 10 via the communication unit 130 and the communication network 900, information for controlling the HMI 15 of the vehicle 10 such that the HMI 15 starts notification to prompt to replace the battery 11 of the vehicle 10 (step S218). The information to be sent to the vehicle 10 may include information on the replacement station 20 that satisfies the predetermined condition (for example, location, facility name, the number of batteries 11 with the predetermined amount of electric power or greater). In the vehicle 10, in response to reception of the information from the management server 100 by the DCM 14, the ECU 12 controls the HMI 15 such that the HMI 15 starts notification to prompt to replace the battery 11. The notification to prompt to replace the battery 11 may include information on the replacement station 20 that satisfies the predetermined condition (for example, location, facility name, the number of batteries 11 with the predetermined amount of electric power or greater). In this situation, since the process of step S226 (described later) is not executed yet, the current SOC of the battery 11 of the vehicle 10 has not become lower than the SOC required for the vehicle 10 to travel between the current location and the replacement station 20. In other words, when there is a small margin in the remaining amount of electric power of the battery 11 for the amount of electric power required for the vehicle 10 to reach the replacement station 20, such as when the current SOC of the battery 11 of the vehicle 10 is higher than or equal to the SOC required and is lower than the threshold, it is possible to inform the user to prompt the user of the vehicle 10 to replace the battery 11.

Subsequently, the CPU 110 executes a process for the user of the vehicle 10 to book the replacement device 21 for the battery 11 at the replacement station 20 with the HMI 15 (step S219). Booking the replacement device 21 of the replacement station 20 is managed by the management server 100 or the equipment server 200 of the replacement station 20. The booking process includes a process of communicating with a server that manages booking (the management server 100 or the equipment server 200) to display a screen for booking the replacement device 21 of the replacement station 20 on the HMI 15 of the vehicle 10 and a process of receiving booking details (when, for example, a plurality of the replacement devices 21 is provided at the replacement station 20, information with which the replacement device 21 to be booked is identified, start time, and end time) of the user by the server from the HMI 15 via the DCM 14.

When the CPU 110 determines that, in the vehicle 10, the HMI 15 is notifying to prompt to replace the battery 11 (YES in step S212) or after step S219, the CPU 110 acquires traffic congestion information of a route from the current location of the vehicle 10 to the replacement station 20 from the source providing traffic congestion information via the communication network 900 and the communication unit 130 (step S221).

The CPU 110 determines whether there is traffic congestion in the route (step S222). When the CPU 110 determines that there is traffic congestion (YES in step S222), the CPU 110 sends, to the vehicle 10 via the communication unit 130 and the communication network 900, information for offering the user with the HMI 15 of the vehicle 10 that consumption of electric power is suppressed (for example, parking the vehicle 10, turning off the ignition of the vehicle 10, or stopping a device having a relatively greater consumption of electric power in the vehicle 10) until the traffic congestion disappears (step S223).

When the CPU 110 determines that there is no traffic congestion (NO in step S222) or after step S223, the CPU 110 identifies the SOC required for the vehicle 10 to travel between the current location and the replacement station 20 (step S224). The CPU 110 determines whether the acquired SOC of the battery 11 of the vehicle 10 is lower than the SOC required (step S225). When the CPU 110 determines that the SOC is lower than the SOC required (YES in step S225), the CPU 110 sends, to the vehicle 10 via the communication unit 130 and the communication network 900, information for prohibiting notification to prompt to replace the battery 11 in the vehicle 10 (step S226). In such a case, it is possible not to provide notification that makes the user of the vehicle 10 feel burdensome by determining that the user of the vehicle 10 has no intention to replace the battery 11 (an intention to perform charging and not to perform replacement).

When the CPU 110 determines that the SOC is not lower than the SOC required (NO in step S225) or after step S226, the CPU 110 returns the process to the higher-level process of the source calling the battery replacement notification process. Modifications
(1) In the above-described embodiments, as shown in FIG. 1 and FIG. 2, the electrical storage device mounted on the vehicle 10 and configured to store electric power used to drive the vehicle 10 is described as the battery 11. However, the configuration is not limited thereto. The electrical storage device may be an electrical storage device of another type, for example, a capacitor.
(2) In the above-described embodiments, as shown in FIG. 1 and FIG. 2, the battery 11 of the vehicle 10 is automatically replaced by the replacement device 21 at the replacement station 20. However, the configuration is not limited thereto. The battery 11 of the vehicle 10 may be replaced manually by a worker at the replacement station 20.
(3) In the above-described embodiments, as shown in step S113 of FIG. 3 and step S213 of FIG. 4, the predetermined condition for identifying the replacement station 20 to replace the battery 11 of the vehicle 10 is a condition that the replacement station 20 is closest from the current location of the vehicle 10 (that is, the vehicle 10 can reach the replacement station 20 with the least amount of electric power required). However, the configuration is not limited thereto. As long as the predetermined condition is a condition for identifying the replacement station 20 to replace the battery 11 of the vehicle 10, the predetermined condition may be another condition. The predetermined condition may be a condition that the replacement station 20 has the highest frequency of use or may be a condition that the replacement station 20 is set in advance.
(4) In the above-described embodiments, as shown in step S113 of FIG. 3 and step S213 of FIG. 4, the predetermined condition may include a condition that the battery 11 with the predetermined amount of electric power or greater is stored in the replacement station 20. Specifically, information indicating whether the battery 11 with the predetermined amount of electric power or greater is stored is acquired from the equipment server 200, and the replacement station 20 that satisfies the condition that the battery 11 with the predetermined amount of electric power or greater is stored is identified. However, the configuration is not limited thereto. As long as the predetermined condition includes a condition related to the amount of electric power of the electrical storage device such as the battery 11 stored in the replacement place such as the replacement station 20, the predetermined condition may include another condition.

For example, the predetermined condition may include a condition that the amount of electric power stored in each of a predetermined number of batteries 11 (for example, one, five, or the like) in descending order of the amount of electric power at the replacement station 20 is greater than or equal to the predetermined amount of electric power. In this case, information indicating the amount of electric power stored in each of the predetermined number of batteries 11 in descending order of the amount of electric power at the replacement station 20 is acquired from the equipment server 200, and the replacement station 20 that satisfies a condition that the amount of electric power stored in each of the predetermined number of batteries 11 in descending order of the amount of electric power at the replacement station 20 is greater than or equal to the predetermined amount of electric power is identified. Alternatively, in this case, information indicating the amount of electric power stored in each of all the batteries 11 at the replacement station 20 may be acquired from the equipment server 200, and the replacement station 20 that satisfies a condition that the amount of electric power stored in each of the predetermined number of batteries 11 in descending order of the amount of electric power at the replacement station 20 is greater than or equal to the predetermined amount of electric power may be identified.
(5) In the above-described embodiments, as shown in step S113 of FIG. 3 and step S213 of FIG. 4, the predetermined condition may include a condition that the battery 11 with the predetermined amount of electric power or greater is stored in the replacement station 20. Then, the predetermined amount of electric power is, for example, a predetermined value like a value higher than or equal to 50%, such as SOC = 80%. However, the configuration is not limited thereto. The user may be configured to be able to designate the predetermined amount of electric power. Alternatively, the predetermined amount of electric power may be a total value obtained by adding a margin amount of electric power (which may be a value exceeding zero or may be zero) to the amount of electric power required to reach a destination that the user is scheduled to visit after replacement of the battery 11 at the replacement station 20.
(6) In the above-described embodiments, as shown in FIG. 3 and FIG. 4, the HMI 15 of the vehicle 10 informs to prompt to replace the battery 11. The HMI 15 is used to exchange information with the user for the process of booking the replacement device 21 for the battery 11. However, the configuration is not limited thereto. Instead of the HMI 15, the input unit 840 and the output unit 850 of the mobile terminal 800 of the user of the vehicle 10 may be used to perform operation.
(7) In the above-described embodiments, as shown in FIG. 3 and FIG. 4, when the SOC of the battery 11 of the vehicle 10 falls below the threshold, the user is notified to prompt the user to replace the battery 11. Here, the threshold is a predetermined multiple of the SOC corresponding to the amount of electric power required to travel between the current location of the vehicle 10 and, of the replacement stations 20 for the battery 11, the replacement station 20 that satisfies the predetermined condition. In other words, the threshold is a value (%) of the SOC with an estimated margin to travel between the current location of the vehicle 10 and the replacement place such as the replacement station 20. However, the configuration is not limited thereto. The threshold just needs to be a value related to the amount of electric power required to travel between the current location of the vehicle 10 and, of the replacement stations 20 for the battery 11, the replacement station 20 that satisfies the predetermined condition. For example, the threshold may be an amount of electric power (kWh) required with an estimated margin to travel between the current location of the vehicle 10 and the replacement place such as the replacement station 20. Alternatively, the threshold may be a value (kWh) of the amount of electric power required or a value (%) of a corresponding SOC to travel between the current location of the vehicle 10 and the replacement place such as the replacement station 20.

As shown in step S117 of FIG. 3 and step S217 of FIG. 4, an objected to be compared with the threshold is the SOC (%). However, the configuration is not limited thereto. The object to be compared just needs to be a status value with which the remaining amount of electric power of the electrical storage device such as the battery 11 is identified. When, for example, the threshold is a value of SOC, the object to be compared is also an SOC (%). When the threshold is an amount of electric power (kWh), the object to be compared may be a remaining amount of electric power (kWh).

(8) The above-described embodiments may be regarded as the disclosure of the battery replacement system 1, the vehicle 10, the management server 100, the equipment server 200, or the mobile terminal 800 or may be regarded as the disclosure of a control processing method or a control processing program that executes a predetermined process, such as the battery replacement notification process that is executed by the battery replacement system 1, the vehicle 10, the management server 100, the equipment server 200, or the mobile terminal 800.

### Summary

(1) As shown in FIG. 1 to FIG. 4, a notification control method is executed by a notification controller (for example, the ECU 12 of the vehicle 10 or the management server 100) that notifies a user of a vehicle 10 to replace an electrical storage device (for example, the battery 11 or a capacitor) mounted on the vehicle 10 and configured to store electric power used to drive the vehicle 10. As shown in FIG. 1 and FIG. 2, the notification controller includes a processor (for example, the CPU 110 of the management server 100, the CPU of the ECU 12 of the vehicle 10, or the CPU 810 of the mobile terminal 800), and a notification device (for example, the communication unit 130 of the management server 100, the HMI 15 of the vehicle 10, or the output unit 850 of the mobile terminal 800).

As shown in FIG. 3 and FIG. 4, the notification control method includes setting, by the processor, a threshold related to an amount of electric power required to travel between a current location of the vehicle 10 and, of a plurality of replacement places for an electrical storage device (for example, the replacement station 20 in which the automatic replacement device 21 is installed or a replacement place by a worker), the replacement place that satisfies a predetermined condition (for example, a condition that the replacement station 20 is closest from the current location, a condition that the replacement station 20 has the highest frequency of use, or a condition that the replacement station 20 is set in advance) (for example, in FIG. 3 and FIG. 4, an SOC with an estimated margin to travel between the current location and the replacement place as shown in step S115 and step S215, an amount of electric power required with an estimated margin, corresponding to the SOC, or an amount of electric power required with no estimated margin or a corresponding SOC required) (for example, step S115 of FIG. 3 or step S215 of FIG. 4), a status value with which the remaining amount of electric power of the electrical storage device is identified (for example, an SOC (%) or a remaining amount of electric power (kWh)) (for example, step S116 of FIG. 3 or step S202 of FIG. 4), and controlling a notification device such that, when the status value falls below the threshold, the notification device executes a process for notifying the user to prompt the user to replace the electrical storage device (for example, as shown in step S118 of FIG. 3 and step S218 of FIG. 4, which may be a process for the HMI 15 of the vehicle 10 to notify to prompt for replacement, or a process for the output unit 850 of the mobile terminal 800 to notify to prompt for replacement, or, as shown in step S218 of FIG. 4, a process for the CPU 110 and the communication unit 130 of the management server 100 to send information to notify to prompt for replacement in the vehicle 10, or a process for the CPU 110 and the communication unit 130 of the management server 100 to send information to notify to prompt for replacement in the mobile terminal 800) (for example, step S118 of FIG. 3 or step S218 of FIG. 4).

With this configuration, when the status value with which the remaining amount of electric power of the electrical storage device is identified falls below the threshold related to the amount of electric power required to travel between the current location of the vehicle 10 and the replacement place for the electrical storage device, the user is notified to prompt the user to replace the electrical storage device. As a result, it is possible to prompt the user to replace the electrical storage device before the remaining amount of electric power of the electrical storage device falls below the remaining amount of electric power required for the vehicle 10 to reach the replacement place for the electrical storage device.

(2) As shown in step S113 of FIG. 3 and step S213 of FIG. 4, the predetermined condition may include a condition that the vehicle 10 can reach the replacement place from the current location with the least amount of electric power required.

With this configuration, it is possible to prompt the user to replace the electrical storage device before the remaining amount of electric power falls below the remaining amount of electric power required for the vehicle to reach the replacement place that the vehicle 10 can reach from the current location with the least amount of electric power required.

(3) As shown in step S113 of FIG. 3 and step S213 of FIG. 4, the notification control method may further include acquiring, by the processor, information on an amount of electric power of an electrical storage device stored in each of the plurality of replacement places, and the predetermined condition may include a condition related to an amount of electric power of the electrical storage device, indicated by the information acquired.

With this configuration, the replacement place where the user is prompted to replace the electrical storage device can be set to the replacement place where the electrical storage device that satisfies the condition related to the amount of electric power is stored.

(4) As shown in step S115 of FIG. 3 and step S215 of FIG. 4, the setting the threshold may include setting, by the processor, the threshold with an electric power efficiency and a distance between the current location and the replacement place that satisfies the predetermined condition.

With this configuration, it is possible to further accurately set the threshold related to the amount of electric power required to travel between the current location and the replacement place.

(5) As shown in step S119 of FIG. 3 and step S219 of FIG. 4, the notification control method may further include controlling, by the processor, the notification device such that the notification device provides, to the user, a screen for booking replacement of the electrical storage device at the replacement place.

With this configuration, the user does not need to execute operation for displaying a screen for booking replacement of the electrical storage device at the replacement place, so it is possible to reduce time and effort of the user to perform operation for booking replacement of the electrical storage device at the replacement place.

(6) As shown in step S126 of FIG. 3 and step S226 of FIG. 4, the notification control method may further include, when the remaining amount of electric power falls below the amount of electric power required to travel between the current location of the vehicle 10 and the replacement place that satisfies the predetermined condition, prohibiting, by the processor, notification to prompt the user to replace the electrical storage device.

With this configuration, when the remaining amount of electric power of the electrical storage device falls below the amount of electric power required to travel between the current location of the vehicle and the replacement place, it is possible to stop unnecessary notification such as prompting for replacement by determining that the user has no intention to replace the electrical storage device (the user does not have an intention to replace the electrical storage device and has an intention to charge the electrical storage device).

(7) As shown in step S114 of FIG. 3 and step S214 of FIG. 4, the processor may be configured to, when a distance between the current location of the vehicle and the replacement place that satisfies the predetermined condition is shorter than a predetermined distance, control the notification device such that the notification device notifies the user to prompt the user to replace the electrical storage device.

In the case of an area where there is no replacement place around, it is presumable that, basically, the electrical storage device is not replaced and is charged. For this reason, when the distance between the current location of the vehicle 10 and the replacement place is longer than or equal to the predetermined distance, the user feels burdensome if the user is notified to prompt the user to replace the electrical storage device. With this a configuration, when the distance between the current location of the vehicle 10 and the replacement place is shorter than the predetermined distance, the user is notified to prompt the user to replace the electrical storage device. As a result, it is possible for the user not to feel burdensome.

(8) As shown in FIG. 3 and FIG. 4, the notification control method may further include acquiring, by the processor, traffic congestion information of a route from the current location of the vehicle to the replacement place that satisfies the predetermined condition (for example, step S121 of FIG. 3 or step S221 of FIG. 4), and, when a likelihood of traffic congestion is indicated by the traffic congestion information, controlling, by the processor, the notification device such that the notification device offers to suppress consumption of electric power until the traffic congestion disappears (for example, step S122 and step S123 of FIG. 3 or step S222 and step S223 of FIG. 4).

The user is notified to prompt to replace the electrical storage device when the status value with which the remaining amount of electric power of the electrical storage device is identified falls below the threshold related to the amount of electric power required to reach the replacement place for the electrical storage device. In such a case, if the vehicle meets traffic congestion and consumes an extra amount of electric power, a possibility that the vehicle cannot reach the replacement place increases. With this configuration, when the likelihood of traffic congestion in the route from the current location to the replacement place is indicated, the user is offered to suppress consumption of electric power until the traffic congestion disappears. As a result, it is possible to avoid a situation that the vehicle cannot reach the replacement place.

(9) As shown in FIG. 1 to FIG. 4, the vehicle 10 includes a processor (for example, the ECU 12) configured to notify a user to replace an electrical storage device (for example, the battery 11 or a capacitor) configured to store electric power used to drive the vehicle 10, a communication device (for example, the DCM 14) for communicating with an external device (for example, the management server 100), and a notification device (for example, the HMI 15) configured to notify the user of information. As shown in FIG. 4, the processor is configured to control the communication device such that the communication device sends information indicating a current location of the vehicle 10 and a remaining amount of electric power of the electrical storage device to the external device (for example, in the management server 100, information sent from the vehicle 10 is acquired in step S202), and, when a status value with which the remaining amount of electric power is identified falls below a threshold related to an amount of electric power required to travel between the current location and, of a plurality of replacement places for the electrical storage device, the replacement place that satisfies a predetermined condition, control the notification device such that the notification device notifies information prompting to replace the electrical storage device, sent from the external device (for example, the information sent in step S218 by the management server 100 is notified by the HMI 15 of the vehicle 10). The threshold is identified by the external device.

With this configuration, it is possible to prompt the user to replace the electrical storage device before the remaining amount of electric power of the electrical storage device falls below the remaining amount of electric power required for the vehicle 10 to reach the replacement place for the electrical storage device.

The embodiments described above are illustrative and not restrictive in all respects. The scope of the disclosure is not defined by the description of the above-described embodiments, and is defined by the appended claims. The scope of the disclosure is intended to encompass all modifications within the scope of the appended claims.

## Claims

1. A notification control method that is executed by a notification controller (12) configured to notify a user of a vehicle (10) to replace an electrical storage device (11) mounted on the vehicle and configured to store electric energy used to drive the vehicle (10), the notification control method comprising:
a setting step of setting, by a processor (110), a threshold which is at least 1.1 times of a state of charge corresponding to an amount of electric energy required to travel between a current location of the vehicle (10) and a replacement place (20) for the electrical storage device (11), the replacement place satisfying a predetermined condition;
an identifying step of identifying, by the processor (110), a status value with which a remaining amount of electric energy of the electrical storage device is identified; and
when the status value falls below the threshold, a controlling step of controlling, by the processor (110), a notification device such that the notification device notifies the user to prompt the user to replace the electrical storage device, wherein
the notification controller includes the processor and the notification device and the threshold and the status value are values of the state of charge, the method being **characterized in that** it further comprises a prohibiting step of prohibiting, by the processor (110), notification to prompt the user to replace the electrical storage device (11), when the remaining amount of electric energy falls below the amount of electric energy required to travel between the current location of the vehicle (10) and the replacement place (20) that satisfies the predetermined condition.

2. The notification control method according to claim 1, wherein the predetermined condition includes a condition that the vehicle (10) reaches the replacement place (20) from the current location with the least amount of electric energy required.

3. The notification control method according to claim 2, further comprising an acquiring step of acquiring, by the processor (110), information on an amount of electric energy of an electrical storage device (21) stored the replacement place (20), wherein
the predetermined condition includes a condition related to an amount of electric energy of the electrical storage device (21) indicated by the information acquired.

4. The notification control method according to any of claims 1 to 3, wherein the setting step of setting the threshold includes setting, by the processor (110), the threshold with an electric energy efficiency and a distance between the current location and the replacement place (20) that satisfies the predetermined condition.

5. The notification control method according to any of claims 1 to 4, further comprising a providing step of controlling, by the processor (110), the notification device such that the notification device provides, to the user, a screen for booking replacement of the electrical storage device at the replacement place (20).

6. The notification control method according to any of claims 1 to 5, further comprising:
an acquiring step of acquiring, by the processor (110), traffic congestion information of a route from the current location of the vehicle (10) to the replacement place (20) that satisfies the predetermined condition; and
an offering step of controlling, by the processor (110), the notification device such that the notification device offers to suppress consumption of electric energy until traffic congestion disappears when a likelihood of the traffic congestion is indicated by the traffic congestion information.

7. A notification controller (12) configured to notify a user of a vehicle (10) to replace an electrical storage device (11) mounted on the vehicle and configured to store electric energy used to drive the vehicle (10), the notification controller (12) comprising:
a processor; and
a notification device, wherein
the processor is configured to
set a threshold which is at least 1.1 times of a state of charge corresponding to an amount of electric energy required to travel between a current location of the vehicle (10) and a replacement place (20) for the electrical storage device (11), the replacement place (20) satisfying a predetermined condition,
identify a status value with which a remaining amount of electric energy of the electrical storage device (11) is identified wherein the threshold and the status value are values of the state of charge,
compare the status value with the threshold, and
when the status value falls below the threshold, control the notification device such that the notification device notifies the user to prompt the user to replace the electrical storage device (11), the notification controller (12) being **characterized in that** it is further configured to prohibit, by the processor, notification to prompt the user to replace the electrical storage device (11), when the remaining amount of electric energy falls below the amount of electric energy required to travel between the current location of the vehicle (10) and the replacement place (20) that satisfies the predetermined condition.

8. A vehicle (10) configured to notify a user to replace an electrical storage device (11) configured to store electric energy used to drive the vehicle, the vehicle (10) comprising:
a processor (12);
a communication device (14) used to communicate with an external device (100); and
a notification device configured to notify the user of information, wherein
the processor (12) is configured to
control the communication device (14) such that the communication device sends, to the external device (100), information indicating a current location of the vehicle (10) and a remaining amount of electric energy of the electrical storage device (11), and
control the notification device such that the notification device notifies information prompting to replace the electrical storage device (11) when a status value with which the remaining amount of electric energy is identified falls below a threshold which is at least 1.1 times of a state of charge corresponding to an amount of electric energy required to travel between the current location and a replacement place (20) for the electrical storage device (11), wherein the threshold and the status value are values of the state of charge,
the information is sent from the external device (100),
the threshold is set by the external device (100), and
the replacement place (20) satisfies a predetermined condition, the vehicle (10) being **characterized in that** it is further configured to prohibit, by the processor (12), notification to prompt the user to replace the electrical storage device (11), when the remaining amount of electric energy falls below the amount of electric energy required to travel between the current location of the vehicle (10) and the replacement place (20) that satisfies the predetermined condition.

## Patentansprüche

1. Benachrichtigungssteuerungsverfahren, das von einer Benachrichtigungssteuerung (12) ausgeführt wird, die konfiguriert ist, um einen Benutzer eines Fahrzeugs (10) zu benachrichtigen, eine elektrische Speichervorrichtung (11) zu ersetzen, die an dem Fahrzeug montiert und konfiguriert ist, um elektrische Energie speichert, die verwendet wird, um das Fahrzeug (10) anzutreiben, das Benachrichtigungssteuerungsverfahren umfassend:
einen Festlegungsschritt eines Festlegens, durch einen Prozessor (110), eines Schwellenwerts, der mindestens das 1,1-fache eines Ladezustands ist, der einer Menge an elektrischer Energie entspricht, die erforderlich ist, um zwischen einer aktuellen Position des Fahrzeugs (10) und einer Ersatzstelle (20) für die elektrische Speichereinrichtung (11) zu fahren, wobei die Ersatzstelle eine vorbestimmte Bedingung erfüllt;
einen Identifizierungsschritt eines Identifizierens, durch den Prozessor (110), eines Zustandswerts mit dem eine verbleibende Menge an elektrischer Energie der elektrischen Speichervorrichtung identifiziert wird; und
wenn der Zustandswert unter den Schwellenwert fällt, einen Steuerungsschritt eines Steuerns, durch den Prozessor (110), einer Benachrichtigungsvorrichtung, sodass die Benachrichtigungsvorrichtung den Benutzer benachrichtigt, um den Benutzer aufzufordern, die elektrische Speichervorrichtung zu ersetzen, wobei
wobei die Benachrichtigungssteuerung den Prozessor und die Benachrichtigungsvorrichtung umfasst und der Schwellenwert und der Zustandswert Werte des Ladezustands sind, wobei das Verfahren **dadurch gekennzeichnet ist, dass** es ferner einen Verbotsschritt eines Verbietens, durch den der Prozessor (110), einer Benachrichtigung umfasst, um den Benutzer aufzufordern, die elektrische Speichervorrichtung (11) zu ersetzen, wenn die verbleibende Menge an elektrischer Energie unter die Menge an elektrischer Energie fällt, die erforderlich ist, um zwischen der aktuellen Position des Fahrzeugs (10) und der Ersatzstelle (20) zu fahren, die die vorbestimmte Bedingung erfüllt.

2. Benachrichtigungssteuerungsverfahren nach Anspruch 1, wobei die vorbestimmte Bedingung eine Bedingung beinhaltet, dass das Fahrzeug (10) die Ersatzstelle (20) von dem aktuellen Position aus mit der geringsten Menge an erforderlicher elektrischer Energie erreicht.

3. Benachrichtigungssteuerungsverfahren nach Anspruch 2, ferner umfassend einen Erfassungsschritt eines Erfassens, durch den Prozessor (110), von Informationen über eine Menge elektrischer Energie einer elektrischen Speichervorrichtung (21), die die Ersatzstelle (20) speichert, wobei
die vorbestimmte Bedingung eine Bedingung beinhaltet, die sich auf eine Menge an elektrischer Energie der elektrischen Speichervorrichtung (21) bezieht, die durch die erfassten Informationen angegeben wird.

4. Benachrichtigungssteuerungsverfahren nach einem der Ansprüche 1 bis 3, wobei der Festlegungsschritt eines Festlegens des Schwellenwerts ein Festlegen, durch den Prozessor (110), des Schwellenwerts mit einer elektrischen Energieeffizienz und einer Entfernung zwischen dem aktuellen Position und der Ersatzstelle (20), die die vorbestimmte Bedingung erfüllt, umfasst.

5. Benachrichtigungssteuerungsverfahren nach einem der Ansprüche 1 bis 4, ferner umfassend einen Bereitstellungsschritt eines Steuerns, durch den Prozessor (110), der Benachrichtigungsvorrichtung, sodass die Benachrichtigungsvorrichtung dem Benutzer ein Menüfenster zum Buchen eines Ersatzes der elektrischen Speichervorrichtung an der Ersatzstelle (20) bereitstellt.

6. Benachrichtigungssteuerungsverfahren nach einem der Ansprüche 1 bis 5, das ferner umfasst:
einen Erfassungsschritt eines Erfassens, durch den Prozessor (110), von Verkehrsstauinformationen einer Strecke von dem aktuellen Position des Fahrzeugs (10) zu der Ersatzstelle (20), die die vorbestimmte Bedingung erfüllt; und
einen Angebotsschritt eines Steuerns, durch den Prozessor (110), der Benachrichtigungsvorrichtung, sodass die Benachrichtigungsvorrichtung anbietet, einen Verbrauch von elektrischer Energie zu unterdrücken, bis der Verkehrsstau verschwindet, wenn eine Wahrscheinlichkeit des Verkehrsstaus durch die Verkehrsstauinformationen angegeben wird.

7. Benachrichtigungssteuerung (12), die konfiguriert ist, um einen Benutzer eines Fahrzeugs (10) zu benachrichtigen, eine elektrische Speichervorrichtung (11) zu ersetzen, die an dem Fahrzeug montiert und konfiguriert ist, um elektrische Energie speichert, die verwendet wird, um das Fahrzeug (10) anzutreiben, die Benachrichtigungssteuerung (12) umfassend:
einen Prozessor; und
eine Benachrichtigungsvorrichtung, wobei
der Prozessor zu Folgendem konfiguriert ist
Festlegen eines Schwellenwerts, der mindestens das 1,1-fache eines Ladezustands ist, der einer Menge an elektrischer Energie entspricht, die erforderlich ist, um zwischen einer aktuellen Position des Fahrzeugs (10) und einer Ersatzstelle (20) für die elektrische Speichereinrichtung (11) zu fahren, wobei die Ersatzstelle (20) eine vorbestimmte Bedingung erfüllt,
Identifizieren eines Zustandswerts mit dem eine verbleibende Menge an elektrischer Energie der elektrischen Speichervorrichtung (11) identifiziert wird, wobei der Schwellenwert und der Zustandswert Werte des Ladezustands sind,
Vergleichen des Zustandswerts mit dem Schwellenwert, und
wenn der Zustandswert unter den Schwellenwert fällt, Steuern der Benachrichtigungsvorrichtung, sodass die Benachrichtigungsvorrichtung den Benutzer benachrichtigt, um den Benutzer aufzufordern, die elektrische Speichervorrichtung (11) zu ersetzen, wobei die Benachrichtigungssteuerung (12) **dadurch gekennzeichnet ist, dass** sie ferner konfiguriert ist, um eine Benachrichtigung durch den Prozessor zu verbieten, um den Benutzer aufzufordern, die elektrische Speichereinrichtung (11) zu ersetzen, wenn die verbleibende Menge an elektrischer Energie unter die Menge an elektrischer Energie fällt, die erforderlich ist, um zwischen der aktuellen Position des Fahrzeugs (10) und der Ersatzstelle (20) zu fahren, die die vorbestimmte Bedingung erfüllt.

8. Fahrzeug (10), das konfiguriert ist, um einen Benutzer zu benachrichtigen, eine elektrische Speichervorrichtung (11) zu ersetzen, die konfiguriert ist, um elektrische Energie speichert, die verwendet wird, um das Fahrzeug anzutreiben, das Fahrzeug (10) umfassend: einen Prozessor (12);
eine Kommunikationsvorrichtung (14), die zur Kommunikation mit einer externen Vorrichtung (100) verwendet wird; und
eine Benachrichtigungsvorrichtung, die konfiguriert ist, um dem Benutzer Informationen zu benachrichtigen, wobei
der Prozessor (12) zu Folgendem konfiguriert ist
Steuern der Kommunikationsvorrichtung (14), sodass die Kommunikationsvorrichtung Informationen an die externe Vorrichtung (100) sendet, die eine aktuelle Position des Fahrzeugs (10) und eine verbleibende Menge an elektrischer Energie der elektrischen Speichereinrichtung (11) angeben, und
Steuern der Benachrichtigungsvorrichtung, sodass die Benachrichtigungsvorrichtung Informationen benachrichtigt, die zum Ersetzen des elektrischen Speichers (11) auffordern, wenn ein Zustandswert, mit dem die verbleibende Menge an elektrischer Energie identifiziert wird, unter einen Schwellenwert fällt, der mindestens das 1,1-fache eines Ladezustands ist, der einer Menge an elektrischer Energie entspricht, die erforderlich ist, um zwischen der aktuellen Position und einer Ersatzstelle (20) für den elektrischen Speicher (11) zu reisen, wobei der Schwellenwert und der Zustandswert Werte des Ladezustands sind,
wobei die Informationen von der externen Vorrichtung (100) gesendet werden, der Schwellenwert von der externen Vorrichtung (100) festgelegt wird, und
die Ersatzstelle (20) eine vorbestimmte Bedingung erfüllt, wobei das Fahrzeug (10) **dadurch gekennzeichnet ist, dass** es ferner konfiguriert ist, um eine Benachrichtigung durch den Prozessor (12) zu verbieten, um den Benutzer aufzufordern, die elektrische Speichereinrichtung (11) zu ersetzen, wenn die verbleibende Menge an elektrischer Energie unter die Menge an elektrischer Energie fällt, die erforderlich ist, um zwischen der aktuellen Position des Fahrzeugs (10) und der Ersatzstelle (20) zu fahren, die die vorbestimmte Bedingung erfüllt.

## Revendications

1. Procédé de commande de notification qui est exécuté par un contrôleur de notification (12) configuré pour notifier à un utilisateur d'un véhicule (10) de remplacer un dispositif de stockage électrique (11) monté sur le véhicule et configuré pour stocker l'énergie électrique utilisée pour entraîner le véhicule (10), le procédé de commande de notification comprenant :
une étape de définition consistant à définir, par le biais d'un processeur (110), un seuil qui correspond à au moins 1,1 fois un état de charge correspondant à une quantité d'énergie électrique nécessaire pour se déplacer entre un emplacement actuel du véhicule (10) et un lieu de remplacement (20) pour le dispositif de stockage électrique (11), le lieu de remplacement satisfaisant une condition prédéterminée ;
une étape d'identification consistant à identifier, par le biais du processeur (110), une valeur d'état avec laquelle une quantité d'énergie électrique restante du dispositif de stockage électrique est identifiée ; et
lorsque la valeur d'état tombe en dessous du seuil, une étape de commande consistant à commander, par le biais du processeur (110), un dispositif de notification de sorte que le dispositif de notification notifie l'utilisateur afin d'inviter l'utilisateur à remplacer le dispositif de stockage électrique, dans lequel
le contrôleur de notification comprend le processeur et le dispositif de notification, et le seuil et la valeur d'état sont des valeurs de l'état de charge, le procédé étant **caractérisé en ce qu'**il comprend en outre une étape d'interdiction consistant à interdire, par le biais du processeur (110), la notification invitant l'utilisateur à remplacer le dispositif de stockage électrique (11), lorsque la quantité d'énergie électrique restante tombe en dessous de la quantité d'énergie électrique nécessaire pour se déplacer entre l'emplacement actuel du véhicule (10) et le lieu de remplacement (20) qui satisfait la condition prédéterminée.

2. Procédé de commande de notification selon la revendication 1, dans lequel la condition prédéterminée comprend une condition selon laquelle le véhicule (10) atteint le lieu de remplacement (20) à partir de l'emplacement actuel avec la quantité minimale d'énergie électrique requise.

3. Procédé de commande de notification selon la revendication 2, comprenant en outre une étape d'acquisition consistant à acquérir, par le biais du processeur (110), des informations sur une quantité d'énergie électrique d'un dispositif de stockage électrique (21) stocké dans le lieu de remplacement (20), dans lequel
la condition prédéterminée comprend une condition liée à une quantité d'énergie électrique du dispositif de stockage électrique (21) indiquée par les informations acquises.

4. Procédé de commande de notification selon l'une quelconque des revendications 1 à 3, dans lequel l'étape de définition consistant à définir le seuil consiste à définir, par le biais du processeur (110), le seuil, avec une efficacité d'énergie électrique et une distance entre l'emplacement actuel et le lieu de remplacement (20) qui satisfait la condition prédéterminée.

5. Procédé de commande de notification selon l'une quelconque des revendications 1 à 4, comprenant en outre une étape de fourniture consistant à commander, par le biais du processeur (110), le dispositif de notification, de sorte que le dispositif de notification fournit, à l'utilisateur, un écran permettant de réserver le remplacement du dispositif de stockage électrique sur le lieu de remplacement (20).

6. Procédé de commande de notification selon l'une quelconque des revendications 1 à 5, comprenant en outre :
une étape d'acquisition consistant à acquérir, par le biais du processeur (110), des informations d'encombrement de la circulation sur un itinéraire entre l'emplacement actuel du véhicule (10) et le lieu de remplacement (20) qui satisfait la condition prédéterminée ; et
une étape de proposition consistant à commander, par le biais du processeur (110), le dispositif de notification, de sorte que le dispositif de notification propose de supprimer une consommation d'énergie électrique jusqu'à ce que l'encombrement de la circulation disparaisse lorsque la probabilité d'encombrement de la circulation est indiquée par les informations d'encombrement de la circulation.

7. Contrôleur de notification (12) configuré pour notifier, à un utilisateur d'un véhicule (10), de remplacer un dispositif de stockage électrique (11) monté sur le véhicule et configuré pour stocker l'énergie électrique utilisée pour entraîner le véhicule (10), le contrôleur de notification (12) comprenant :
un processeur ; et
un dispositif de notification, dans lequel
le processeur est configuré pour
définir un seuil qui correspond à au moins 1,1 fois un état de charge correspondant à une quantité d'énergie électrique nécessaire pour se déplacer entre un emplacement actuel du véhicule (10) et un lieu de remplacement (20) pour le dispositif de stockage électrique (11), le lieu de remplacement (20) satisfaisant une condition prédéterminée,
identifier une valeur d'état avec laquelle une quantité d'énergie électrique restante du dispositif de stockage électrique (11) est identifiée, dans lequel le seuil et la valeur d'état sont des valeurs de l'état de charge,
comparer la valeur d'état au seuil, et
lorsque la valeur d'état tombe en dessous du seuil, commander le dispositif de notification, de sorte que le dispositif de notification notifie l'utilisateur afin d'inviter l'utilisateur à remplacer le dispositif de stockage électrique (11), le contrôleur de notification (12) étant **caractérisé en ce qu'**il est en outre configuré pour interdire, par le biais du processeur, la notification invitant l'utilisateur à remplacer le dispositif de stockage électrique (11), lorsque la quantité d'énergie électrique restante tombe en dessous de la quantité d'énergie électrique nécessaire pour se déplacer entre l'emplacement actuel du véhicule (10) et le lieu de remplacement (20) qui satisfait la condition prédéterminée.

8. Véhicule (10) configuré pour notifier, à un utilisateur, de remplacer un dispositif de stockage électrique (11) configuré pour stocker l'énergie électrique utilisée pour entraîner le véhicule, le véhicule (10) comprenant :
un processeur (12) ;
un dispositif de communication (14) utilisé pour communiquer avec un dispositif externe (100) ; et
un dispositif de notification configuré pour notifier des informations à l'utilisateur, dans lequel le processeur (12) est configuré pour :
commander le dispositif de communication (14) de sorte que le dispositif de communication envoie, au dispositif externe (100), des informations indiquant un emplacement actuel du véhicule (10) et une quantité d'énergie électrique restante du dispositif de stockage électrique (11), et
commander le dispositif de notification de sorte que le dispositif de notification notifie des informations invitant à remplacer le dispositif de stockage électrique (11) lorsqu'une valeur d'état avec laquelle la quantité d'énergie électrique restante est identifiée tombe en dessous d'un seuil qui correspond à au moins 1,1 fois un état de charge correspondant à une quantité d'énergie électrique nécessaire pour se déplacer entre l'emplacement actuel et un lieu de remplacement (20) pour le dispositif de stockage électrique (11), dans lequel le seuil et la valeur d'état sont des valeurs de l'état de charge,
dans lequel les informations sont envoyées par le dispositif externe (100),
le seuil est défini par le dispositif externe (100), et
le lieu de remplacement (20) satisfait une condition prédéterminée, le véhicule (10) étant **caractérisé en ce qu'**il est en outre configuré pour interdire, par le biais du processeur (12), la notification invitant l'utilisateur à remplacer le dispositif de stockage électrique (11), lorsque la quantité d'énergie électrique restante tombe en dessous de la quantité d'énergie électrique nécessaire pour se déplacer entre l'emplacement actuel du véhicule (10) et le lieu de remplacement (20) qui satisfait la condition prédéterminée.
